# EUROPEAN PATENT SPECIFICATION

(11) **EP 2 507 301 B1**
(45) Date of publication and mention of the grant of the patent: **22.01.2014**
(21) Application number: 10790617.4
(22) Date of filing: 01.12.2010
(51) Int. Cl.: C08J 3/12, C08J 3/20, C08J 3/22, C08J 5/00, C08K 5/098

(54) **A PROCESS FOR THE ADDITION OF ADDITIVES TO ULTRA HIGH MOLECULAR WEIGHT POLYETHYLENE**
VERFAHREN FÜR DEN ZUSATZ VON ADDITIVEN VON POLYETHYLEN MIT ULTRAHOHEM MOLEKULARGEWICHT
PROCÉDÉ D'AJOUT D'ADDITIFS À DU POLYÉTHYLÈNE À POIDS MOLÉCULAIRE TRÈS ÉLEVÉ

(30) Priority: 02.12.2009 EP 09075532
(43) Date of publication of application: 10.10.2012
(73) Proprietor: Saudi Basic Industries Corporation, Riyadh 11422 (SA)
(72) Inventor: DE VOS, Roelof Franciscus Gerardus Maria, NL-6160 GA GELEEN (NL); VAN BEEK, Dimphna Johanna Maria, NL-6160 GA GELEEN (NL)
(74) Representative: Vroemen, Maurice
(86) International application number: PCT/EP2010/007290
(87) International publication number: WO 2011/066957

(56) References cited:
- EP-A1- 0 661 340
- GB-A- 1 338 198

## Description

The present invention relates to a process for the addition of additives to ultra high molecular weight polyethylene.

The catalytic production of polyethylene is known in the art. A special class of polyethylene is ultra high molecular weight polyethylene (UHMWPE) with a very high average molecular weight ranging from about 1.000.000 to well above 10.000.000 grams/mole whereas high density polyethylene (HDPE) typically has a molar mass between about 50.000 and 300.000 g/mol. The polymer synthesis to obtain UHMWPE is disclosed in for example Journal of Macromolecular Science Part C Polymer Reviews (Vol. C42, No 3, pp 355-371, 2002; Ultra high molecular weight polyethylene by Kelly). The higher molecular weight gives UHMWPE the unique combination of characteristics making it suitable for applications where lower molecular weight grades fail. The very high molecular weight results in excellent properties for example a very high abrasion resistance, a high chemical resistance, a very high impact resistance and a low dynamic coefficient of friction. Because of the very high molecular weight, the bad flowability of the UHMWPE powder, and because of the extreme high melt viscosity, specialized processing methods like compression moulding and ram extrusion are applied. UHMWPE is processed from powder via, for example, sheets, bars or rods into the end application.

As mentioned, typical processing procedures are ram extrusion and compression moulding. Both methods in principle involve sintering of the powder particles at high temperature, high pressure and long residence times. (Stein; Engineered Materials Handbook, Volume 2: Engineering Plastics, ASM International 1999; pages 167-171). Consequently, the powder properties heavily influence the UHMWPE production process as well as the converting process. The bulk density, the particle size distribution and the particle shape of the powder are very important because they determine the storage, the transportability and the handling, for example the filling of the moulds before converting. A higher bulk density in combination with a free flowability of the powder allows an increased storable amount per unit volume which is very advantageous for powder handling. In addition, a free flowing high bulk density powder may decrease clogging during handling and transportation.

In case that UHMWPE powder is produced with a Ziegler Natta based catalyst this polymer may contain chlorine comprising catalyst residues. As indicated, UHMWPE is mainly converted by the use of ram extrusion and compression moulding in which high temperatures, high pressures and very long residence times (in comparison with common polyethylene converting) are applied. The combination of the presence of chlorine, a high processing temperature and the presence of moisture displays the negative property to corrode the metal of moulds used for the conversion of UHMWPE powder into a UHMWPE rods, tubes, bars, profiles and sheets and may result in discoloration (yellowing) of the end application.

A small amount of corrosion inhibitor may be added to the UHMWPE virgin or base resin powder produced after the polymerization process to neutralise the chlorine residues thereby preventing corrosion during conversion to sheets, bars or rods. Corrosion inhibitors for example chloride/acid acceptors and/or scavengers may be added in small amounts, for example in the range between 0.01-0.50 percent by weight, to the dry virgin or base polymer powder. Examples of suitable acid scavengers include inorganic products for example hydrotalcite, hydrocalumite, oxides such as zinc oxide and organic products for example metallic soaps such as metallic stearates for example calcium stearate and zinc stearate.

Generally, as the amounts of the additive are very small and the additive itself is not free flowing it is difficult to dose additives directly into a continuous mixing stream while obtaining a homogeneous mixture.

It is the object of the present invention to provide a process to distribute additives homogeneously in the virgin UHMWPE powder after the continuous production process of UHMWPE.

The process according to the invention is characterised in that a master fluff comprising virgin ultra high molecular weight polyethylene powder and an additive is added to virgin ultra high molecular weight polyethylene powder.

Preferably the additive in the master fluff is a corrosion inhibitor, an acid scavenger, a (UV) stabiliser, an antioxidant, a lubricant, an antimicrobial agent, a colorant, a pigment, a whitener, a crosslinker, a filler, an antifogging agent, an antistatic and/or a flame retardant. Other types of additive may also be added with the process according to the invention.

Preferably the additive is a powder.

Suitable acid scavengers and inhibitors include for example hydrotalcite and calcium stearate, suitable lubricants include for example montan wax and erucamide; a suitable antifogging agent includes for example glycerol ester; a suitable antistatic includes for example glycerol monostearate; suitable fillers includes for example carbon black and talc; a suitable antimicrobial agent includes for example zinc imadine; a suitable flame retardant includes for example decabromodiphenyl; a suitable crosslinker includes for example dicumylperioxide; a suitable colour/pigment includes for example cuphthalocyanine; a suitable filler includes for example calciumcarbonate; a suitable stabiliser include for example octadecyl 3,5-di-t-butyl-4-hydroxyhydrocinnamate; a suitable anti oxidant includes for example tris(2,4 di-t-butylphenyl) phosphate; a suitable UV (light) stabiliser includes for example poly[[6- [(1,1,3,3-tetramethylbutyl)amino]-s-triazine-2,4-diyl][2,2,6,6-tetramethyl-4-piperidinyl)imino]hexamethylene [(2,2,6,6-tetramethyl-4-piperidinyl)imino] and a suitable optical whitener includes for example bis-benzoaxole.

The master fluff is added into the continuous mixing stream of virgin UHMWPE powder.

The virgin UHMWPE powder used in the free flowing master fluff is unmodified and does not comprise any additives.

According to a preferred embodiment the invention is characterised in that the master fluff is added to ultra high molecular weight polyethylene powder in continuous mixing equipment.

Suitable examples of the continuous mixing equipment are the thrust and turbulent mixer types with for example a vortex screw or mixing ribbons.

The master fluff comprises UHMWPE and additive(s) as a very homogeneous well dispersed powder mixture without agglomerates or aggregates of the additive on micro and macro scale. Preferably, the master fluff is produced in mixing equipment via a batch process. This equipment may be any mixer with an intensive mixing process for cohesive powders using high shear force at relative low speeds being able to obtain a very homogeneous dispersed powder mixture of UHMWPE and additives. Preferably the temperature of the composed mixed master fluff does not increase during mixing.

The master fluff shows an excellent and stable homogeneous dispersion, good flowability, non sticky behaviour, no clustering and no segregation during handling and storage.

As stated before the combination of the presence of chlorine, a high processing temperature and the presence of moisture displays the negative property to corrode the metal of moulds used for the conversion of UHMWPE powder into a UHMWPE rods, tubes, bars, profiles and sheets and may result in discoloration (yellowing) of the end application.

This problem is solved by the process according to invention wherein the additive is a corrosion inhibitor and/or an acid scavenger.

More preferably the additive is an acid scavenger.

Preferably the acid scavenger is organic based.

According to a further preferred embodiment of the invention the acid scavenger is a metal soap.

A preferred metal soap is metal stearate.

The metal stearate may be a precipitated or a non-precipitated stearate.

Preferably the metal stearate is a precipitated metal stearate.

Preferably the precipitated metal stearate is precipitated calcium stearate or precipitated magnesium stearate.

The metal stearates themselves are not free flowing because of the cohesive forces between the particles. An essential advantage of the process according to the present invention is that the metal stearate in combination with the UHMWPE becomes free flowing.

As disclosed by Zweifel et al in Plastics Additives Handbook (pages 517-520; 6th edition, Carl Hanser Verlag; ISBN 978-1-56990-430-5) a metal stearate may be prepared by means of a direct process or via a precipitation process.

Preferably, the solid magnesium salt of a carboxylic acid is obtained via the precipitation process. The precipitation process results in tiny particles with a uniform and narrow particle size distribution and a regular shape. Generally the flake like morphology of the metal stearate obtained with the precipitation process has an aspect ratio (=length/diameter) for example higher than 5. Products obtained via the direct process have a broader distribution and an aspect ratio length/diameter of about 1.

A further advantage of the process according to the invention is that due to the high stability of the master fluff no segregation occurs during logistic handling and stocking.

Preferably, the free flowing master fluff powder mixture comprises between 0.1 and 9.0 % by weight of additive and between 99.9 and 91.0 % by weight of virgin UHMWPE. More preferably the master fluff comprises between 2.0 and 5.0 % by weight of the additive and between 98.0 and 95.0 % by weight of virgin UHMWPE.

In case the additive is for example an acid scavenger the addition of the master fluff results in a homogeneous distribution of the acid scavenger in the final product comprising a homogeneous mixture of UHMWPE and acid scavenger wherein the amount of acid scavenger in the final product may range between for example 0.01 and 1% by weight relative to the final composition.

The minimum amount of the acid scavenger in the final product is determined by the amount and type of acid catalyst residues present in the virgin UHMWPE powder. In addition the selected amount of scavenger may be responsible for the final powder properties for example flow and bulk density of the final powder product. An inorganic acid scavenger will be very homogeneous dispersed over the UHMWPE powder particles but will also hinder the sintering effect between the UHMWPE powder particles and thus decreasing the excellent mechanical and chemical properties of the end product. An organic acid scavenger for example calcium stearate may slightly improve the sintering because of its interaction with the polymer particles.

In case that the additive is a corrosion inhibitor the selection of the corrosion inhibitor depends on its physical properties and its mechanical and physical properties in combination with UHMWPE.

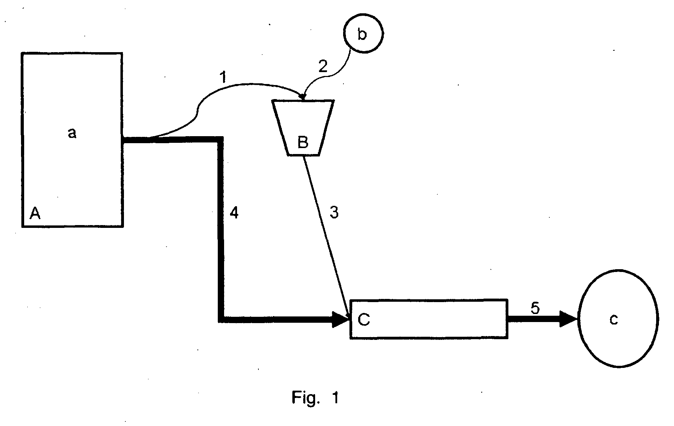

Figure 1 shows a schematic overview of the process directed to the addition of the master fluff to the virgin UHMWPE powder obtaining the final UHMWPE powder composition wherein:
A. = Continuous polymerisation reactor
B. =Batch mixing equipment
C. =Continuous mixing equipment

a. =virgin UHMWPE powder
b. =additive
c. =homogeneous dispersed mixture of UHMWPE and additive

1. =virgin UHMWPE powder
2. =additive
3. =master fluff
4. =virigin UHMWPE powder
5. =homogeneous dispersed mixture of UHMWPE and additive.

The virgin UHMWPE powder 4 is produced in the continuous polymerisation reactor A.

The master fluff 3 is obtained by mixing virgin UHMWPE 1 and additive 2 in batch mixing equipment B.

The continuous addition of the master fluff 3 and the addition of virgin UHMWPE powder 4 to the continuous powder mixing equipment C is an efficient method to distribute the additives homogeneously in UHMWPE powder after the continuous process of UHMWPE production to obtain a homogeneous dispersed mixture 5 of UHMWPE and additive.

The virgin UHMWPE to be applied in the master fluff may have the following characteristics:
- an average molecular weight higher than 500.000 g/mole
- an average particle size (D₅₀ ) in the range between 50 and 250 micrometer and
- a bulk density in the range between 350 and 600 kg/m³

The bulk density of the master fluff may increase between 0 and 20 % relative to the bulk density of the virgin UHMWPE.

In general the average particle size of the master fluff powder is substantially equal to the average particle size of the virgin UHMWPE.

The dry flow of the master fluff may be between 0 and 20 % higher than the dry flow of the virgin UHMWPE. The dry flow is measured according to ASTM D 1895-69.

Applications of the homogeneous dispersed mixture obtained as the final product can be found in very different areas where excellent impact strength and abrasive wear resistance are required. The compositions according to the present invention can be applied for example in the production of rods, tubes, bars, and more intricate continuous profiles by ram extrusion and large sheets by compression moulding.

EP661340A discloses a polyethylene molding material having a viscometrically measured average molecular weight of at least 106 g/mol, wherein said molding material contains 0.05 to 5.0% by weight, based on the molding material, of a salt of a higher monocarboxylic acid or of a mixture of such salts, the salt or the salt mixture melts at between 80 and 220 degrees Celsius and the melt viscosity of the salt or the salt mixture at the processing temperature of the molding material is not more than 50 Pa.s. Consequently the product is applied in the melt at a temperature higher than 80 degrees Celsius. EP661340A does not disclose a master fluff. EP661340A discloses non-precipitated non free flowing salts of a carboxylic acid. EP661340A is directed to problems in the production of thick-walled and larger profiles. Their surface frequently exhibits transverse cracks. The problem is solved by the addition of very particular lubricants selected from a large number of different compounds. These compounds prevent the formation of transverse cracks in the ram extrusion of UHMWPE. The salts of the higher monocarboxylic acids are derived from acids having 10 to 24 carbon atoms and are applied as a processing aid to prevent cracking of the article.

GB1338198 is directed to polymers having improved environmental stress-crack resistance. GB1338198 is directed to high density polyethylene (HDPE) and is not directed to UHMWPE. The essential additive to be used to solve the problem of environmental stress crack resistance (ESCR) is sodium benzoate as an aqueous solution which is not added to a continuous process. The sodium benzoate comprising solution is directly sprayed onto the final polymer composition. ESCR is an essential characteristic related to the production of bottles with HDPE. UHMWPE obtained with the process according to the present invention is not applied in the production of bottles. A further essential feature of the process of GB1338198 is the requirement to melt the HDPE solid particles to remove the air and to be able to shape the polymeric solid into the desired articles. This densification process is unsuitable to be applied in the present invention.

The invention will be elucidated by means of the following non-restrictive examples.

### EXAMPLES I-VI and Comparative Examples A-C.

### Preparation of master fluff I-VI

Virgin UHMWPE powder with an average molecular weight of 6.000.000 gram/moles, a bulk density of 492 kg/m³ and a particle size (D₅₀) of 199 µm and an acid scavenger as indicated in Table 1 were mixed in an intensive mixing process during 4 minutes at a temperature of 25 degrees Celsius with a tip speed of 5.5 m/s via a batch process.

The mixing of virgin UHMWPE and acid scavenger took place until the two components were completely homogeneous mixed.

Whether the mixture is completely homogeneous mixed is determined visually and by X ray fluorescence (XRF) determination of the powder. Visually the absence of aggregates indicates the homogeneous mixing of the components. In addition, XRF determination was performed to study whether different powder samples (within the same batch) contained similar amounts of element which is an indirect indication of the homogeneous distribution of the metal stearate.

Example I is repeated with the exception that in Comparative Example A no acid scavenger is added.

**Table 1**

| Example | Acid scavenger | Amount acid scavenger % by weight | Bulk density master fluff (kg/m³) | Dry Flow master fluff (seconds) |
|---|---|---|---|---|
| A | - | - | 492 | 21 |
| I | Precipitated Ca-stearate | 2 | 511 | 24 |
| II | Precipitated Ca-stearate | 5 | 493 | 40 |
| III | Precipitated Ca-stearate | 9 | 471 | 62 |
| B | Precipitated Ca-stearate | 10 | 462 | insufficient flow |
| IV | Precipitated Mg-stearate | 2 | 494 | 23 |
| V | Precipitated Mg-stearate | 5 | 485 | 24 |
| VI | Precipitated Mg-stearate | 9 | 470 | 49 |
| C | Precipitated Mg-stearate | 10 | 466 | insufficient flow |

The bulk density of the master fluff decreases with increasing weight percentage of acid scavenger, which implies an increase in storage room per amount of powder.

The dry flow increases slightly with increasing weight percentage of acid scavenger, and in the presence of 10 weight % of metal stearate no flow can be observed.

### Examples VII- XV

### Mixing of the master fluff and virgin UHMWPE in a continuous process

A master fluff according to Example V and UHMWPE with an average molecular weight of 6.000.000 gram/moles, a bulk density of 492 kg/m³ and a particle size (D ₅₀) of 199 µm were added at room temperature to virgin UHMWPE into a lab scale High Speed Mixer (Erweka SW 1/-S) with a tip speed of 100 rpm.

**Table 2**

| Example | Residence mixing time (min) | Speed (rpm) | Amount master fluff % by weight | Theoretical amount Mg-stearate (ppm) | Observed amount Mg-stearate (ppm) |
|---|---|---|---|---|---|
| VII | 1 | 100 | 0.4 | 200 | 200 |
| VIII | 2 | 100 | 0.4 | 200 | 184 |
| IX | 5 | 100 | 0.4 | 200 | 188 |
| X | 1 | 100 | 0.2 | 100 | 80 |
| XI | 2 | 100 | 0.2 | 100 | 88 |
| XII | 5 | 100 | 0.2 | 100 | 126 |
| XIII | 1 | 100 | 0.1 | 50 | 42 |
| XIV | 2 | 100 | 0.1 | 50 | 44 |
| XV | 5 | 100 | 0.1 | 50 | 44 |

The dilution of the masterfluff into the virgin UHMWPE was very homogeneous at a speed of 100 rpm as observed by the constant values of magnesium stearate as determined by XRF. The Examples VII-IX, the Examples X-XII and the Examples XIII-XV show that the values for the observed amount and the values for the theoretical amount are substantially equal.

Table II shows that the theoretical amount and the observed amount of magnesium stearate can be considered to be equal.

The residence time was of no influence on the homogeneity of the dispersion.

### Examples XVI-XVIII

Examples X-XII were repeated with the exception that the tip speed was changed from 100 rpm to 50 rpm.

**Table 3**

| Example | Residence time (min) | Speed (rpm) | Amount master fluff % by weight | Theoretical amount Mg-stearate (ppm) | Observed amount Mg-stearate (ppm) |
|---|---|---|---|---|---|
| XVI | 1 | 50 | 0.2 | 100 | 80 |
| XVII | 2 | 50 | 0.2 | 100 | 88 |
| XVIII | 5 | 50 | 0.2 | 100 | 86 |

The conclusions related to Table 3 are identical to the conclusions related to Table 2.The residence time and the mixing speed are of no influence on the homogeneity and dispersion of the magnesium stearate. This indicates that the master fluff was optimal homogeneous mixed.

## Claims

1. A process for the addition of additives to ultra high molecular weight polyethylene **characterised in that** a master-fluff comprising between 99.9 and 91.0 % by weight virgin ultra high molecular weight polyethylene powder and between 0.1 and 9.0 % by weight of additive is added to virgin ultra high molecular weight polyethylene powder and wherein the master fluff is added to ultra high molecular weight polyethylene powder in continuous mixing equipment.

2. A process according to Claim 1 **characterised in that** the additive is a corrosion inhibitor, an acid scavenger, a (UV) stabiliser, an antioxidant, a lubricant, an antimicrobial agent, a colorant, a pigment, a whitener, a crosslinker, a filler, an antifogging agent, an antistatic and/or a flame retardant.

3. A process according to Claim 2 **characterised in that** the additive is a corrosion inhibitor or an acid scavenger.

4. A process according to Claim 3 **characterised in that** the additive is an acid scavenger.

5. A process according to Claim 4 **characterised in that** the acid scavenger is a metal stearate.

6. A process according to Claim 5 **characterised in that** the metal stearate is calcium stearate or magnesium stearate.

7. A process according to any one of Claims 5-6 **characterised in that** the metal stearate is a precipitated metal stearate.

8. A process according to any one of Claims 1-7 **characterised in that** the master fluff comprises between 2.0 and 5.0 % by weight additive and between 98.0 and 95.0 % by weight ultra high molecular weight polyethylene.

## Patentansprüche

1. Verfahren zur Zugabe von Additiven zu ultrahochmolekularem Polyethylen, **dadurch gekennzeichnet, dass** man einen Masterstaub, der zwischen 99,9 und 91,0 Gew.-% pulverförmiges frisches ultrahochmolekulares Polyethylen und zwischen 0,1 und 9,0 Gew.-% Additiv umfasst, zu pulverförmigem frischem ultrahochmolekularem Polyethylen gibt und man den Masterstaub in einer kontinuierlichen Mischeinrichtung zu pulverförmigem frischem ultrahochmolekularem Polyethylen gibt.

2. Verfahren nach Anspruch 1, **dadurch gekennzeichnet, dass** es sich bei dem Additiv um einen Korrosionsinhibitor, einen Säurefänger, einen (UV-)Stabilisator, ein Antioxidans, ein Gleitmittel, ein antimikrobielles Mittel, ein Farbmittel, ein Pigment, einen Aufheller, einen Vernetzer, einen Füllstoff, ein Antischleiermittel, ein Antistatikum und/oder ein Flammschutzmittel handelt.

3. Verfahren nach Anspruch 2, **dadurch gekennzeichnet, dass** es sich bei dem Additiv um einen Korrosionsinhibitor oder einen Säurefänger handelt.

4. Verfahren nach Anspruch 3, **dadurch gekennzeichnet, dass** es sich bei dem Additiv um einen Säurefänger handelt.

5. Verfahren nach Anspruch 4, **dadurch gekennzeichnet, dass** es sich bei dem Säurefänger um ein Metallstearat handelt.

6. Verfahren nach Anspruch 5, **dadurch gekennzeichnet, dass** es sich bei dem Metallstearat um Calciumstearat oder Magnesiumstearat handelt.

7. Verfahren nach einem der Ansprüche 5-6, **dadurch gekennzeichnet, dass** es sich bei dem Metallstearat um ein gefälltes Metallstearat handelt.

8. Verfahren nach einem der Ansprüche 1-7, **dadurch gekennzeichnet, dass** der Masterstaub zwischen 2,0 und 5,0 Gew.-% Additiv und zwischen 98,0 und 95,0 Gew.-% ultrahochmolekulares Polyethylen umfasst.

## Revendications

1. Procédé d'adjonction d'additifs à du polyéthylène de masse moléculaire très élevée **caractérisé en ce que** de la poussière maître comprenant entre 99,9 et 91,0 % en poids de poudre vierge de polyéthylène de masse moléculaire très élevée et entre 0,1 et 9,0 % en poids d'additif est ajoutée à de la poudre vierge de polyéthylène de masse moléculaire très élevée et dans lequel la poussière maître est ajoutée à la poudre de polyéthylène de masse moléculaire très élevée dans un équipement de mélange continu.

2. Procédé selon la revendication 1 **caractérisé en ce que** l'additif est un inhibiteur de corrosion, un capteur d'acide, un stabilisant (UV), un antioxydant, un lubrifiant, un agent antimicrobien, un colorant, un pigment, un agent de blanchiment, un agent de réticulation, une charge, un agent antibuée, un agent antistatique et/ou un ignifugeant.

3. Procédé selon la revendication 2 **caractérisé en ce que** l'additif est un inhibiteur de corrosion ou un capteur d'acide.

4. Procédé selon la revendication 3 **caractérisé en ce que** l'additif est un capteur d'acide.

5. Procédé selon la revendication 4 **caractérisé en ce que** le capteur d'acide est un stéarate métallique.

6. Procédé selon la revendication 5 **caractérisé en ce que** le stéarate métallique est le stéarate de calcium ou le stéarate de magnésium.

7. Procédé selon l'une quelconque des revendications 5 et 6 **caractérisé en ce que** le stéarate métallique est un stéarate métallique précipité.

8. Procédé selon l'une quelconque des revendications 1 à 7 **caractérisé en ce que** la poussière maître comprend entre 2,0 et 5,0 % en poids d'additif et entre 98,0 et 95,0 % en poids de polyéthylène de masse moléculaire très élevée.
